# EUROPEAN PATENT SPECIFICATION

(11) **EP 1 458 990 B1**
(45) Date of publication and mention of the grant of the patent: **11.01.2006**
(21) Application number: 01994962.7
(22) Date of filing: 28.12.2001
(51) Int. Cl.: F16D 65/12, F16D 65/847

(54) **BELL FOR A SLIDING DISC BRAKE**
NABENGLOCKE FÜR EINE VERSCHIEBLICHE BREMSSCHEIBE
CLOCHE POUR FREIN A DISQUE COULISSANT

(43) Date of publication of application: 22.09.2004
(73) Proprietor: Freni Brembo S.p.A., 24035 Curno (Bergamo) (IT)
(72) Inventor: GOTTI, Giovanni, I-24036 Almé (Bergamo) (IT); TIRONI, Giovanni, Mario, I-24044 Dalmine (Bergamo) (IT); POLESE, Tommaso, I-31040 Castagnole Di Paese (Bergamo) (IT)
(74) Representative: Crippa, Paolo Ernesto
(86) International application number: PCT/IT2001/000660
(87) International publication number: WO 2003/062662

(56) References cited:
- WO-A-93/14947
- GB-A- 983 548
- US-A- 3 250 349
- US-B1- 6 305 510

## Description

The present invention relates to a bell of a disc for a sliding disc brake, or more simply a bell for a sliding disc brake, and also to a sliding disc for a disc brake and to a sliding disc braking system.

In particular, it relates to a bell for a sliding disc brake, which bell is adapted to be fixed to a wheel hub of a vehicle and adapted to co-operate with a braking band having an annular body of predetermined axis of rotation (X-X) provided with opposed braking surfaces adapted to co-operate with a fixed caliper provided with actuating means arranged in front of only one of the braking surfaces of the disc for applying a braking action to the sliding disc and butting it against braking pads, said braking band further comprising means for sliding coupling to the bell, said bell comprising externally a plurality of projections extending parallel to said axis of rotation (X-X) defining sliding surfaces for the braking band.

It is known to produce disc brakes which provide for the use of a fixed type of caliper, comprising at least one actuating device acting on a first pad and arranged on only one side of the disc, customarily the side of the disc facing towards the inside of the vehicle. The known discs adapted to co-operate with said fixed calipers must necessarily be movable in an axial direction so as to abut on the opposite side against a fixed reference comprising a second pad, or another friction member, and to react to the action exerted by at least one actuating device of the caliper. In particular, it is known to produce these discs so as to make them slidable on a rotating member fixed to the hub of the wheel of the vehicle.

In other words, this sliding disc must be able to slide on the hub, or on a bell fixed to the hub, in order to be able to exert the necessary braking action.

In the prior art there are various examples of disc brakes of this type, generally comprising multiple discs, and customarily used in the field of aeronautics.

These known braking systems comprise discs equipped with braking bands slidable on a bell. For example, these braking systems are described in US Patents 6.305.510, 6.131.932, 4.614.254 and 4.540.067.

A known drawback of these sliding disc braking systems lies in the fact that the necessary high braking actions directed along the axis of the disc cause deterioration of the braking band and bell portions in contact with each other and producing the necessary slidable coupling. This deterioration of the sliding coupling between band and bell, if it is intensified, leads to malfunctions which are unacceptable for the braking system, such as local over-stresses with the occurrence of local wear of the guide members and also jamming of the band on the bell.

As a consequence, there was a strong need to provide a braking system which allows easy and secure sliding of the disc on the bell, even where provision is made to exert high braking actions located in limited arcs with respect to the circumference of the extent of the braking band.

The problem underlying the present invention is therefore that of devising a sliding disc braking system which has structural and functional characteristics such as to satisfy the aforesaid requirements and at the same time remedy the drawbacks exhibited by the braking systems of the prior art.

Said problem is solved as described in the main claim appended hereinafter.

Further characteristics and advantages of the sliding disc braking system according to the present invention will become clear from the following description of some of its preferred exemplary embodiments, provided by way of non-limiting example with reference to the appended drawings, in which:

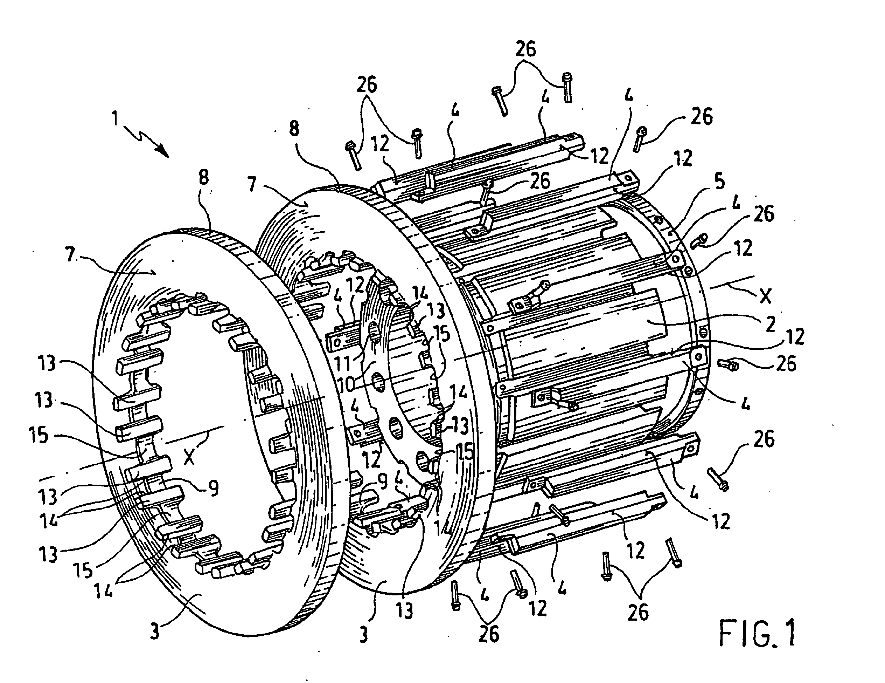

Figure 1 illustrates an exploded axonometric view, from the side facing towards the outside of the vehicle, of a sliding disc braking system;

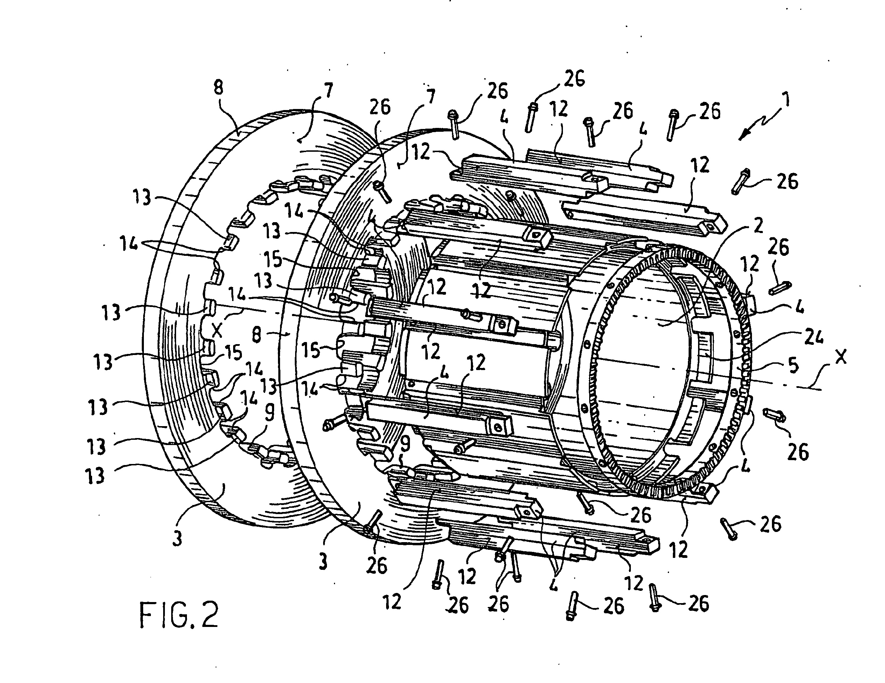

Figure 2 shows an exploded axonometric view, from the side facing towards the inside of the vehicle, of the braking system in Figure 1;
Figure 3 illustrates a front view, from the outside, of the braking system in Figure 1;
Figure 4 illustrates a cross-section, along the line IV-IV in Figure 3, of the braking system in Figure 1 in which two different conditions of use are shown.
Figure 5 illustrates a section, along the line V-V in Figure 3, of the braking system in Figure 1;
Figure 6 illustrates a detail according to the arrow VI in Figure 3, of the braking system in Figure 1;

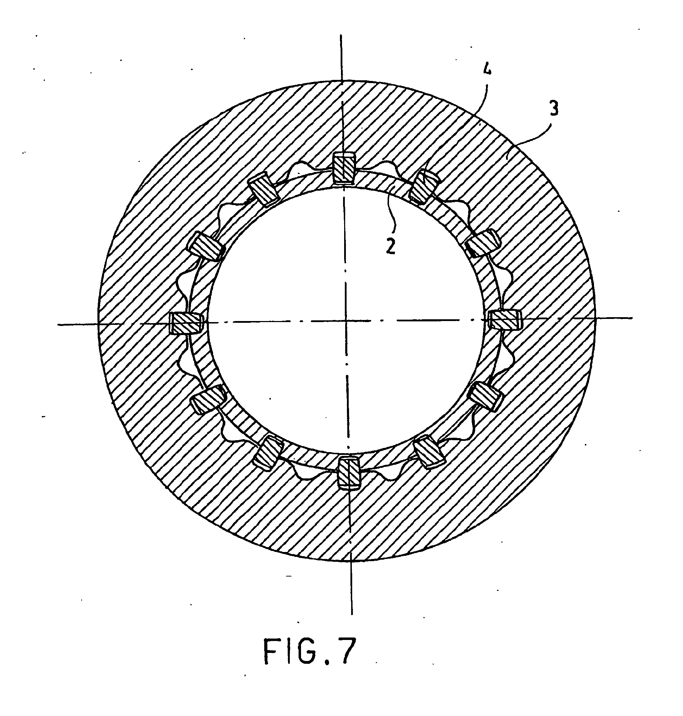

Figure 7 illustrates a section, according to the line VII-VII in Figure 5, of the braking system in Figure 1;

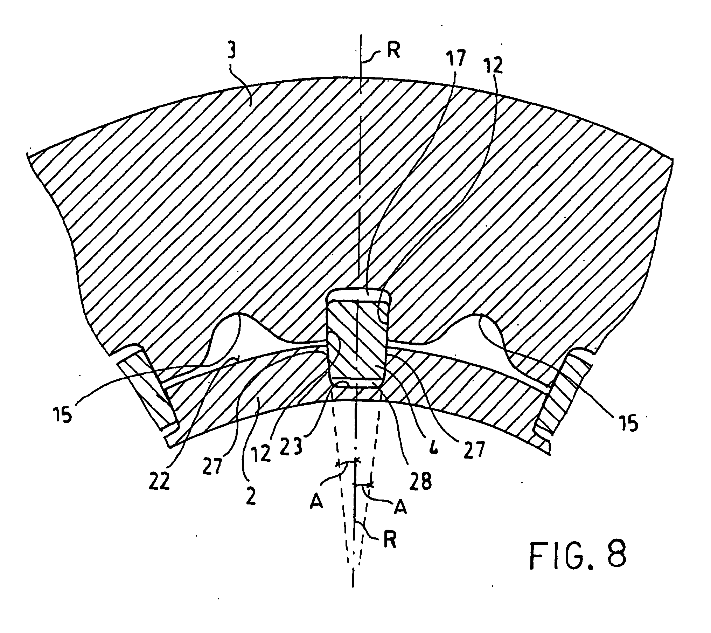

Figure 8 illustrates a detail of the section in Figure 7;
Figure 9 illustrates a second detail of the section in Figure 7 showing the sole braking band;
Figure 10 illustrates a detail in axonometric view from the outside of the braking band of the braking system in Figure 1;
Figure 11 illustrates a second detail in axonometric view of the braking band in Figure 10;
Figure 12 illustrates a detail in axonometric view from the side of the braking band of the braking system in Figure 1 arranged internally and facing a second braking band;
Figure 13 illustrates a second detail in axonometric view of the braking band in Figure 12;
Figure 14 illustrates a cross-section of a sliding disc, according to a further embodiment;
Figure 15 illustrates a cross-section of a sliding disc, according to yet another embodiment; and
Figure 16 illustrates the detail XVI of the sliding disc in Figure 15.

As can be seen from the drawings, the braking system, indicated as a whole by 1, comprises a bell, a plurality of insert projections 4, at least one brake band, or braking band 3, preferably two braking bands 3, and a phonic wheel ring 5.

Said at least one braking band 3 has an annular axially symmetrical body of axis (X-X). Said braking band may be both of the unventilated type and of the ventilated type (not shown), in which case it comprises opposed plates connected to each other by means of fins or bridges and defining ventilation conduits. Said body of the braking band 3 can be produced from various materials adapted to the braking action, including cast iron, for example C.I. 180 HC Cu Cr.

Said at least one braking band is bounded axially by opposed planar braking surfaces 7 and radially by at least one radially outer surface 8, as well as at least one radially inner surface 9.

The opposed braking surfaces 7 are adapted to co-operate with a fixed caliper (not shown) provided with actuating means arranged in front of only one of the braking surfaces of the disc. The fixed caliper applies a braking action to the disc to butt it against braking pads.

The at least one braking band 3 further comprises means for sliding coupling to the bell 2, which has at one end an internal flange 10 adapted to be fixed to a wheel hub of a vehicle, for example by means of through holes 11. Said bell 2 comprises externally a plurality of projections 4 which extend parallel to said axis of rotation (X-X) defining sliding surfaces 12 for the braking band 3.

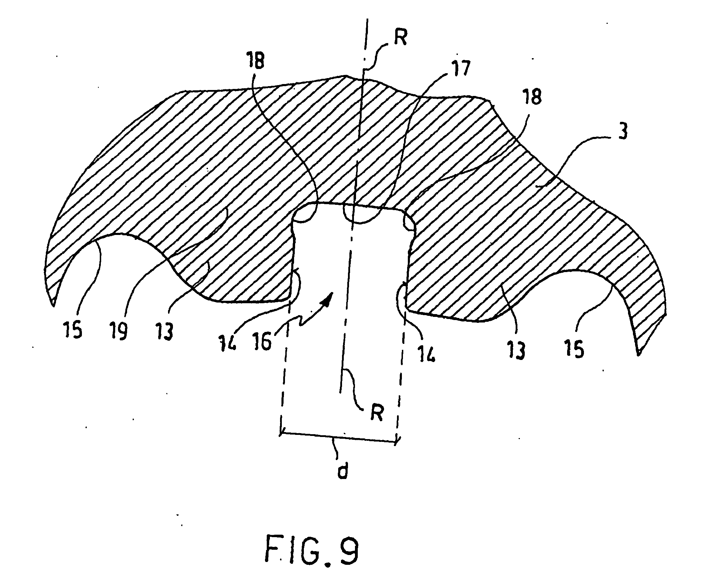

Advantageously, said sliding coupling means comprise a plurality of sliding blocks 13 which extend radially from the band 3 towards the axis of rotation (X-X) and extend longitudinally to protrude from the braking band 3 in a direction parallel to said axis of rotation (X-X). Each sliding block of the plurality of sliding blocks comprises a single sliding surface 14. Each of these sliding surfaces 14 of the plurality of sliding blocks 13 is adapted to co-operate with an opposed sliding surface 12 of a projection 4. Each sliding block 13 has a surface, opposed to the sliding surface 14, which partially bounds an aeration channel 15 (Figure 9).

Since only one sliding surface 14 is provided for each sliding block 13, in order to ensure a bilateral linkage two sliding blocks 13 are provided, arranged opposite each other to define a seat 16 adapted to receive a projection 4 of the bell 2. Said opposed sliding blocks 13 form a pair of sliding blocks which co-operates with opposed sliding surfaces 12 of the projection 4.

According to a preferred embodiment, the opposed sliding surfaces 14 of the pair of sliding blocks 13 are parallel to one another, permitting a controlled play between sliding blocks and projection as the braking band expands when subjected to thermal stress. According to a further embodiment, the opposed sliding surfaces 14 of the pair of sliding blocks 13 are parallel to a radial plane, R-R, passing through the centre line of the cross-section of the seat 16 or of the corresponding projection 4 of the bell.

The opposed sliding blocks 13 which bound seats 16, each adapted to receive a projection 4, according to one embodiment, have a distance (d) between the opposed sliding surfaces 14 of between 7mm and 20mm. Advantageously, from tests carried out on prototypes it was found that a distance between the opposed sliding surfaces of between 12mm and 18mm and, preferably, of 15mm, led to solutions free of jamming and at the same time sufficiently robust for heavy vehicles.

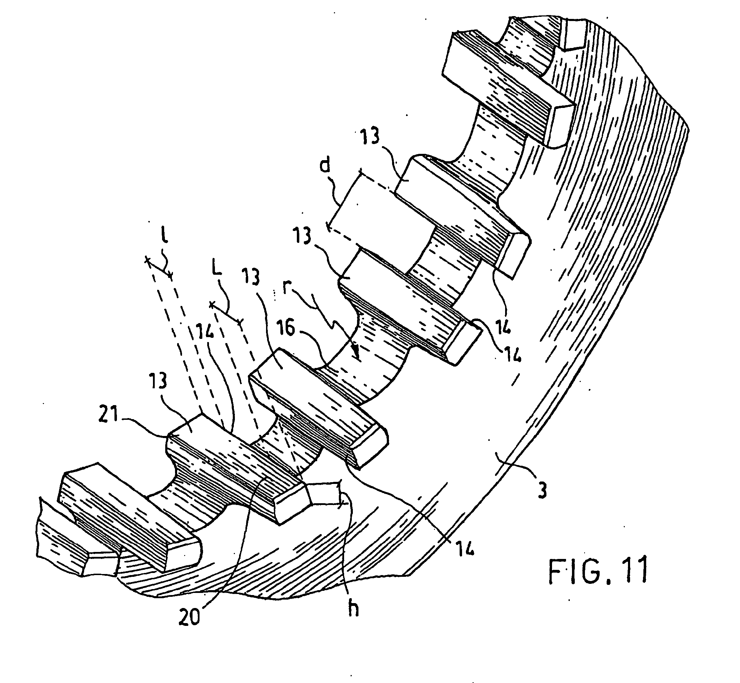

According to one embodiment, each sliding block has a sliding surface having a height of between 5mm and 20mm. Advantageously, from tests carried out on prototypes it was found that a height of 15mm led to solutions free of jamming and sufficiently robust for heavy vehicles (Figure 11).

To reduce the heat transmitted by the braking band to the bell and to provide routes for the escape or removal of the dirt which accumulates on the disc, such as the dust produced by the wear of the friction materials of the actual pads acting against the braking band, according to one embodiment each seat 16 bounded by a pair of opposed sliding blocks 13 is relieved radially in the opposite direction from the axis (X-X) or, in other words, on the body side of the band 3. This relief, when the seat 16 receives the projection 4 of the bell, forms an aeration window 17. Advantageously, the walls which laterally bound the aeration window 17 re-enter as an undercut, or are undercut 18, permitting a free and secure coupling of the sliding surfaces 14 and 12 of the band and of the bell. Moreover, the undercut 18, together with the aeration channel 15, bounding each sliding block 13 from the opposite side, defines the geometry of the leg or neck 19 of the sliding block, which neck provides a connecting portion for connecting each sliding block to the body of the braking band 3 yielding in a controlled or predefined manner. In other words, between contiguous pairs of sliding blocks co-operating with the projection of the bell a free space is provided which restricts the portion of attachment of the sliding block to the band body, making it possible to regulate the yielding of the sliding block, when the latter is stressed in a transverse and/or axial direction or in combined directions. According to one embodiment, the neck of each sliding block 13, or foot, has a minimum transverse dimension, for example in a circumferential direction, of between 15mm and 25mm. From experimental tests it was found that a minimum transverse dimension of 18-20mm provides a neck which is sufficiently robust to withstand severe braking actions and which at the same time yields, on the one hand in order to distribute the load produced by the braking action substantially uniformly over all the pairs of sliding blocks, and also in order to allow the sliding blocks to adapt to the inevitable irregularities of the projections, during the sliding movement of the braking band along the bell.

According to one embodiment, the sliding surface of each sliding block has a height in section transverse to the axis X-X of between 6mm and 10mm and, preferably, of 8.5mm.

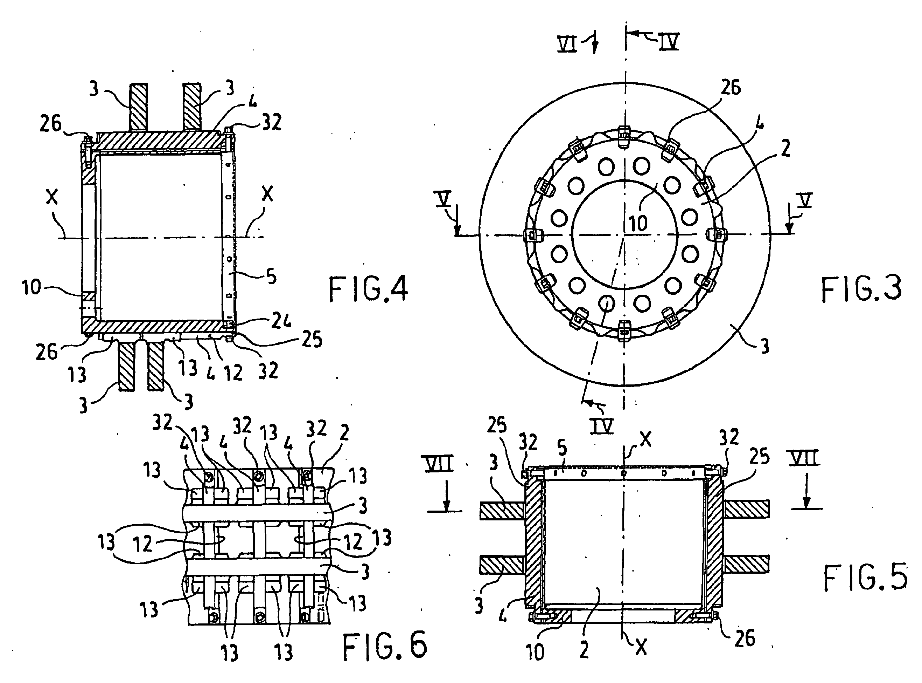

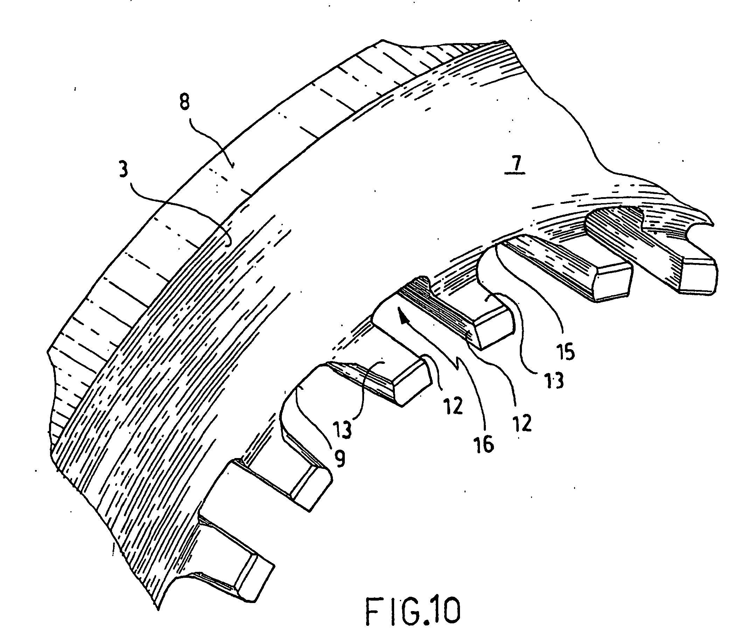

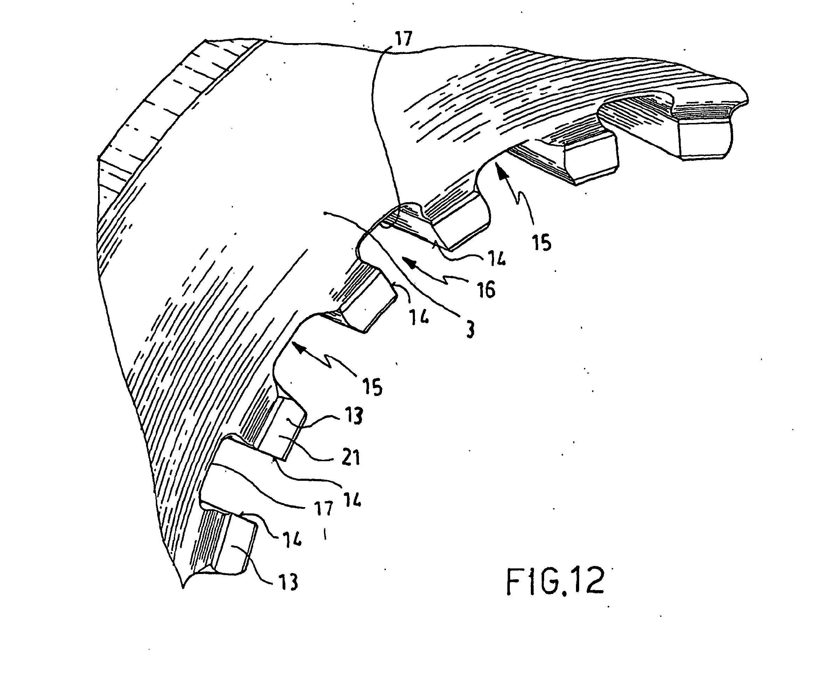

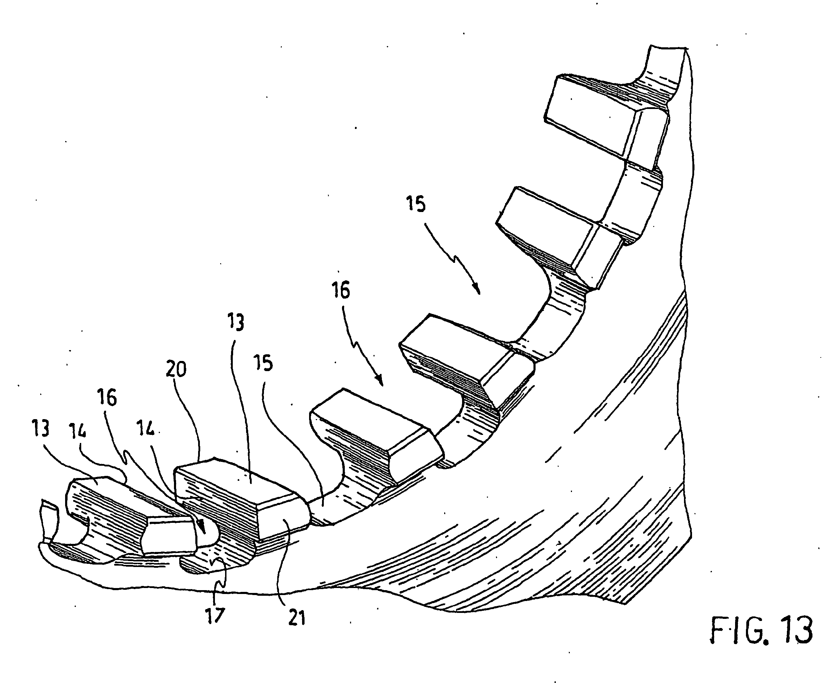

Advantageously, each sliding block 13 extends axially (in the direction of the axis X-X) beyond the braking band, in particular beyond the planes containing the braking surfaces 7, from both its sides, forming the sliding surfaces 14 for the projections of the bell (Figures 10 to 13). According to a preferred embodiment, the opposed extensions 20 and 21 of each sliding block are of different lengths (1) and (L) from one another. For example, the length (1) in an axial direction of at least one of the sliding block portions 20 or 21 which protrudes from the braking band is between 3mm and 30mm. From experimental tests it was found that the length in an axial direction of at least one of the sliding block portions 20 which protrudes from the braking band of between 3mm and 12mm, and in particular between 5mm and 7mm, allows sufficient guidance. In particular, the solution having a length of 6mm demonstrated sufficient guiding action for the band while maintaining reduced dimensions so as not to interfere with a facing braking band (Figure 4 in a position shown lower down in the case of completely worn pads).

The length (L) in an axial direction of the opposed sliding block portion protruding from the braking band of between 15mm and 30mm, advantageously between 18mm and 22mm, and preferably of 20mm, proved to be particularly precise, secure and free of jamming, at the same time limiting the wear on the sliding surfaces 14 and 12.

According to one embodiment, each sliding block 13 has a length in a circumferential direction of between 8mm and 20mm and advantageously of between 14mm and 18mm. From tests carried out on prototypes, it was found that a length in a circumferential direction of 15mm allows adequate robustness with respect to more severe braking actions. This advantage is emphasised by providing for each sliding block 13 to have a shape tapering in a direction away from the plane containing the braking surface 7 of the band 3.

Advantageously, the plurality of sliding blocks 13 is of pairs facing the projections 4 and the pairs of sliding blocks 13 are uniformly distributed over the inner circumference of the braking band 3.

According to one embodiment, said braking band is made of cast iron, and preferably of C.I. 180 HC Cu Cr cast iron.

According to one particular embodiment, the bell 2 co-operates with two braking bands 3 in a mirror-image arrangement.

Moving on now to the description of the bell 2, this comprises, on a surface 22 thereof facing towards the braking band 3, a plurality of recesses 23 which partially and removably receive the inserts 4 constituting, with their portion emerging from the recesses 23, the plurality of projections defining the sliding surfaces 12_for the braking band 3. According to one embodiment, said inserts 4 are bars and are arranged in a manner corresponding to the seats 16 formed by the pairs of opposed sliding blocks, for example, uniformly distributed over the outer circumferential surface of the bell 2.

Advantageously, each insert 4 has a longitudinal extent substantially equal to that of the bell 2. According to one embodiment, each of said inserts 4 has a cross-section having a distance between the opposed sliding surfaces 12 of between 10mm and 20mm and, preferably, of 15mm. Advantageously, the opposed sliding surfaces 12 are parallel to one another and, in particular, are parallel to a median radial plane R-R of the recess 23.

According to one embodiment, each insert is made of wear-resistant and/or tribological material and preferably is made of anti-friction material. For example, each insert is made of corrosion-resistant steel, in particular austenitic corrosion-resistant steel and, advantageously X10CrNi 18 8, preferably obtained from drawn bar. Alternatively, each insert is made of hardened, tempered and ground martensitic corrosion-resistant steel. From experimental tests it was found to be particularly advantageous to provide each insert with a PVD (Physical Vapour Deposition) coating of Balinit™.

With regard to the bell 2, the latter is advantageously produced from modular cast iron, preferably galvanised C.I. 600-5.

According to a particular embodiment, with the body of the bell 2 there is associated a phonic wheel 5. For example, the body of the bell 2 comprises an undercut seat 24 adapted to receive a ring forming the phonic wheel 5.

The inserts are advantageously connected to the body of the bell firmly and at the same time detachably, allowing them to be replaced in case of wear. According to one embodiment, at least one of the ends of each insert 13 is detachably fixed to the body of the bell, for example by means of threaded screws 26 which are screwed into corresponding threaded holes provided in the body of the bell. Alternatively, a first end of each insert 4 is detachably connected to the body of the bell and a second end is detachably connected to the ring forming the phonic wheel 5. For example, at least one insert of the plurality of inserts, besides being received in the recess 23 provided in the bell, is connected by one of its ends 25 to the ring forming the phonic wheel 5 and by the opposite end to the body of the bell.

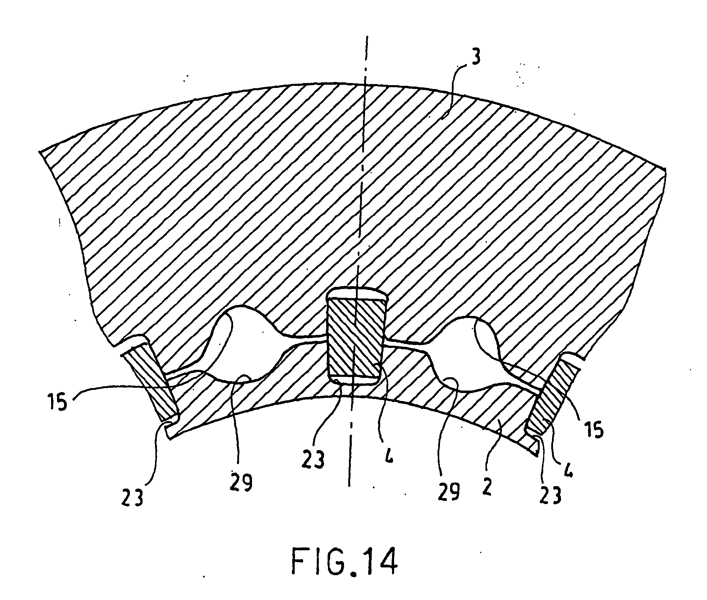

Each recess 23 has a cross-section tapering towards the base thereof, so as to receive a portion of the insert 4 of matching shape. Advantageously, the insert 4 is coupled to the recess 23 by pressure contact between the surfaces of the insert and of the recess. Preferably, the lateral walls 27 of the recess 23 are inclined with respect to a median radial plane R-R at an angle A of between 3 degrees and 7 degrees and, preferably, equal to 5 degrees. To guarantee correct coupling between the flanks of the insert and the flanks or walls of the recess, the latter has a relieved base portion to provide a bell window 28. According to a further embodiment, the body of the bell 2 has, between two contiguous recesses 23, at least one groove for aeration and dirt removal 29 (Figure 14). Advantageously, said aeration and removal groove 29 faces an aeration channel 15 provided in the braking band 3.

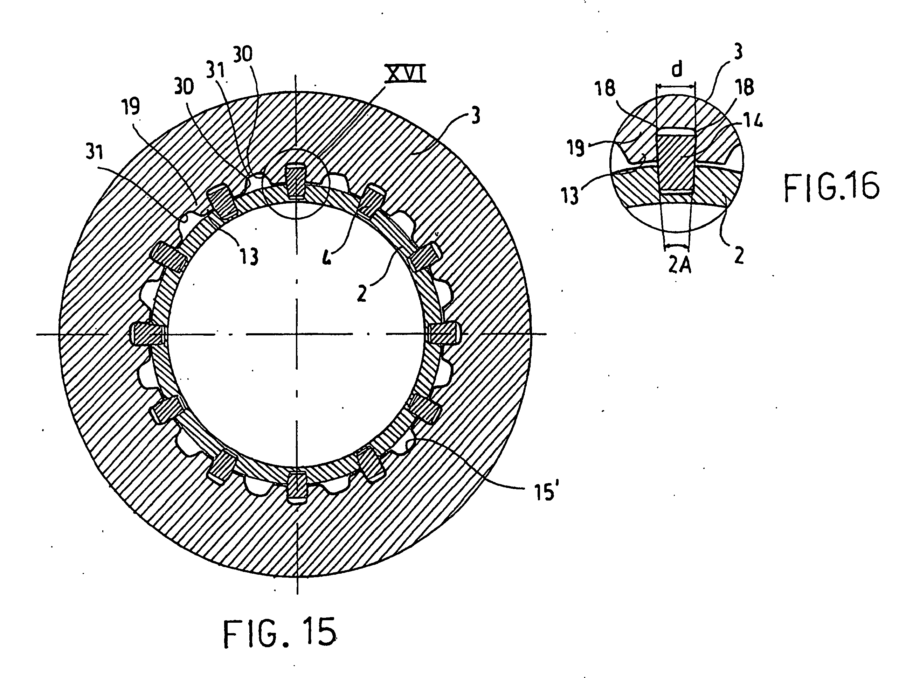

According to one embodiment, the aeration channel 15' has walls 31 and ceiling 30 arranged so as to provide a substantially square section, bounding or tapering the leg 19 for connecting the foot or sliding block 13 to the body of the braking band 3 (Figures 15 and 16).

According to a particular embodiment, at least one of the screw heads 32 which fix the inserts to the bell 2, preferably the heads 32 of the fixing screws placed on the side facing towards the inside of the vehicle, for example the head which simultaneously links the insert 4 and the phonic wheel 5, may be made protruding so as to provide a stop for the braking band. By means of this stop, during the dismantling of the disc or, in any case, each time the caliper is dismantled, the braking band is prevented from slipping off the part of the bell facing towards the inside of the vehicle, instead of from the opposite end, for replacement if necessary. Moreover, this stop limits the travel of the braking band towards the inside of the vehicle in order to avoid accidental impacts against components of the suspension or other components of the vehicle.

The band described herein, according to a particular embodiment, can co-operate also with projections of the bell, providing the sliding surfaces necessary for guiding the braking band and which can be provided in one piece with the body of the bell.

As can be observed from what has been described above, owing to the fact that each sliding block works only from one side, an efficient guiding action is developed for the braking band and, at the same time, its adaptation to inevitable irregularities in the sliding surfaces of the projections of the bell is guaranteed, preventing the band from jamming while sliding on the bell, especially when it is subjected to high loads or braking actions, as occurs for example when the braking system is used in heavy vehicles.

Since each sliding block is bounded on one side by the seat for the projection of the bell, and on the opposite side by the aeration channel, it is connected to the body of the braking band by means of a neck portion having predetermined characteristics of robustness or yielding. By suitably dimensioning the aeration channel it is possible to impart the necessary robustness to the sliding block to withstand the braking actions and at the same time to impart to the sliding block controlled yielding in order to be able to follow the slight irregularities of the sliding surfaces of the bell. This effect is better controlled, by providing axial extensions of the sliding block suitably tapered towards the free ends.

The controlled yielding of the sliding blocks with respect to the body of the braking band further permits better distribution of the load directed circumferentially between all the sliding blocks and the corresponding projections of the bell.

The provision of the aeration channel allows free movement of air to the base of the braking band which facilitates the cooling of the disc and the removal of the dirt which, by accumulating in proximity to the sliding surfaces, would increase the wear on these surfaces.

Aeration is further facilitated owing to the provision of aeration windows in proximity to the seats of the braking band which are adapted to receive the projections of the bell, and also owing to the provision of an aeration and removal groove in the surface of the bell facing towards the braking band, preferably at the aeration channel provided thereon. Owing to the provision of this groove, the bell is also shaped with opposed sliding blocks linking the guide inserts for the braking band and free on the opposite side (Figure 14). In this way, a further controlled yielding is provided for the sliding, without jamming, of the band on the bell and for a more uniform distribution of the load on the bell and on the sliding blocks of the band in a circumferential direction.

Owing to the provision of a plurality of removable inserts in the bell, it is possible to provide for their easy and rapid replacement and/or the selection of particularly wear-resistant materials so as to avoid malfunctions in the sliding of the braking band. In particular, owing to the use of inserts made of steel, for example corrosion-resistant steel, optimum resistance to the wear caused by the sliding of the braking band on the inserts is guaranteed, at the same time avoiding jamming of the braking band. Moreover, these inserts reduce the effect of friction between the sliding surfaces of the band and the bell. The use of corrosion-resistant steel for the inserts avoids the formation of rust and corrosion which accelerate the wear on the sliding surfaces and make jamming of the band on the bell more likely.

An expert in the field, in order to fulfil contingent and specific requirements, could apply to the preferred solution of embodiment of the bell of a disc for a sliding disc brake described above numerous modifications, adaptations and substitutions of members with other functionally equivalent members, without however departing from the scope of the following claims.

## Claims

1. A bell (2) for a sliding disc brake, which bell (2) is adapted to be fixed to a wheel hub of a vehicle and adapted to co-operate with a braking band, said bell comprising externally a plurality of projections extending parallel to said axis of rotation (X-X) defining sliding surfaces (12) for the braking band (3), **characterised in that** said bell (2) comprises on a surface (22) thereof facing towards the braking band (3) a plurality of recesses (23) and **in that** said recesses (23) partially and removably receive inserts (4) constituting, with their portion emerging from the recesses (23), said plurality of projections defining the sliding surfaces (12) for the braking band (3), wherein each recess (23) has a cross-section tapering towards the base of the recess (23), said recess being adapted to receive a portion of the insert (4) of matching shape, the insert (4) is coupled to the recess (23) by pressure contact between the surfaces of the insert and of the recess, and said recess (23) has a relieved base portion to provide bell window (28) when coupled to said insert (4), in order to guarantee correct coupling between walls of the insert (4) and walls of the recess (23).

2. A bell according to claim 1, wherein said inserts (4) are bars.

3. A bell according to claim 1 or 2, wherein said inserts (4) are uniformly distributed circumferentially externally to the bell (2).

4. A bell according to any one of the preceding claims, wherein each insert (4) has a longitudinal extent substantially equal to that of the bell (2).

5. A bell according to any one of the preceding claims, wherein each of said inserts (4) has a cross-section having a distance between the opposed sliding surfaces (12) of between 10mm and 20mm and, preferably, of 15mm.

6. A bell according to any one of the preceding claims, wherein each insert (4) comprises opposed and parallel sliding surfaces (12) for the braking band (3).

7. A bell according to claim 6, wherein the opposed sliding surfaces (12) are parallel to a median radial plane (R-R) of the recess (23).

8. A bell according to any one of the preceding claims, wherein each insert (4) is made of wear-resistant and/or tribological material.

9. A bell according to any one of the preceding claims, wherein each insert (4) is made of anti-friction material.

10. A bell according to any one of claims 1 to 7, wherein each insert (4) is made of corrosion-resistant steel, preferably austenitic corrosion-resistant steel.

11. A bell according to any one of claims 1 to 7, wherein each insert (4) is made of X10CrNi 18 8 corrosion-resistant steel, preferably obtained from drawn bar.

12. A bell according to any one of claims 1 to 7, wherein each insert (4) is made of corrosion-resistant steel, preferably hardened, tempered and ground martensitic corrosion-resistant steel.

13. A bell according to any one of the preceding claims, wherein each insert (4) is made of corrosion-resistant steel with PVD (Physical vapour Deposition) coating of Balinit™.

14. A bell according to any one of the preceding claims, wherein the body of the bell (2) is made of modular cast iron, preferably galvanised C.I. 600-5.

15. A bell according to any one of the preceding claims, wherein a phonic wheel (5) is associated with the body of the bell (2).

16. A bell according to claim 15, wherein the body of the bell (2) comprises an undercut seat (24) adapted to receive a ring forming the phonic wheel (5).

17. A bell according to any one of claims 1 to 14, wherein at least one insert (4) is connected by one of its ends to a ring forming a phonic wheel (5).

18. A bell according to any one of the preceding claims, wherein the body of the bell (2) has between two contiguous recesses (23) at least one groove (29) for aeration and dirt removal.

19. A bell according to claim 18, wherein the aeration and removal groove (29) faces an aeration channel (15) provided in the braking band (3).

20. A bell according to any one of the preceding claims, wherein each recess (23) has a cross-section tapering towards the base of the recess (23), said recess being adapted to receive a portion of the insert (4) of matching shape.

21. A bell according to claim 20, wherein the insert (4) is coupled to the recess (23) by pressure contact between the surfaces of the insert and of the recess.

22. A bell according to claim 20 or 21, wherein the lateral walls (27) of the recess (23) are inclined with respect to a median radial plane (R-R) at an angle (A) of between 3 degrees and 7 degrees, preferably 5 degrees.

23. A bell according to any one of the preceding claims, wherein at least one of the ends of each insert (4) is detachably fixed to the body of the bell (2).

24. A bell according to claim 23, wherein a first end of each insert (4) is detachably connected to the body of the bell (2) and a second end is detachably connected to a ring forming a phonic wheel (5).

25. A disc for a sliding disc brake comprising a bell (2) as defined in any one of the preceding claims, and a braking band (3) co-operating with said bell (2).

26. A braking system (1), comprising a braking band (3) having an annular body of axis of rotation (X-X) provided with opposed braking surfaces (7) adapted to co-operate with a fixed caliper provided with actuating means arranged in front of only one of the braking surfaces of a disc for applying a braking action to the disc and butting it against braking pads, said braking band (3) comprising means for sliding coupling to a bell (2) defined according to any one of claims 1 to 24.

27. A braking system according to claim 26 further, comprising two braking bands (3) in a mirror-image arrangement and co-operating with the bell (2).

28. A braking system according to claim 26, wherein said means for sliding coupling of the braking band (3) comprise sliding blocks (13) which extend radially from the band towards the axis of rotation (X-X) and extend longitudinally to protrude from the braking band in a direction parallel to said axis of rotation (X-X).

29. A braking system according to claim 28, wherein each sliding block (13) comprises only one sliding surface (14), adapted to co-operate with an opposed sliding surface (12) of a projection (4), and an opposed surface bounding an aeration channel (15).

30. A braking system according to claim 29, wherein for each projection (4) of the bell (2) a pair of sliding blocks (13) co-operating with opposed sliding surfaces of the projection (4) is provided.

31. A braking system according to claim 30, wherein the opposed sliding surfaces (14) of the pair of sliding blocks (13) are parallel to one another.

32. A braking system according to claim 31, wherein the opposed sliding surfaces (14) of the pair of sliding blocks (13) are parallel to a radial plane (R-R) passing through the centre line of the cross-section of the projection (4).

33. A braking system according to any one of claims 28 to 32, wherein opposed sliding blocks (13) are provided which bound seats (16), each adapted to receive a projection (4).

34. A braking system according to claim 33, wherein each seat (16) has a distance between the opposed sliding surfaces (14) of between 7mm and 20mm.

35. A braking system according to claim 33, wherein each seat (16) has a distance between the opposed sliding surfaces (14) of between 12mm and 18mm.

36. A braking system according to claim 33, wherein each seat (16) has a distance between the opposed sliding surfaces (14) of 15mm.

37. A braking system according to any one of claims 30 to 37, wherein each sliding block (13) has a sliding surface having a height of between 5mm and 20mm.

38. A braking system according to any one of claims 29 to 37, wherein each sliding block (13) has a sliding surface having a height of 8.5 mm.

39. A braking system according to any one of claims 33 to 38, wherein each seat (16) is relieved radially in a direction opposite to the axis (X-X), forming, when coupled to the projection (4), an aeration window (17).

40. A braking system according to claim 39, wherein each aeration window (17) is bounded laterally by re-entrant undercut (18) walls.

41. A braking system according to any one of claims 29 to 40, wherein each sliding block (13) is connected to the body of the braking band (3) by means of a portion with predetermined yielding.

42. A braking system according to any one of claims 29 to 41, wherein each sliding block (13) extends axially beyond the braking band (3), on both its sides, forming the sliding surfaces (14) for the projections (4) of the bell (2).

43. A bralcing system according to claim 42, wherein the opposed extensions (20, 21) of each sliding block (13) have different lengths (1, L) from one another.

44. A braking system according to claim 42 or 43, wherein the length in an axial direction of at least one of the sliding block portions (20, 21) which protrudes from the braking band (3) is between 3mm and 30mm.

45. A braking system according to claim 42 or 43, wherein the length in an axial direction of at least one of the sliding block portions (20, 21) which protrudes from the braking band (3) is between 3mm and 12mm.

46. A braking system according to claim 42 or 43, wherein the length in an axial direction of at least one of the sliding block portions (20, 21) which protrudes from the braking band (3) is between 5mm and 7mm.

47. A braking system according to claim 42 or 43, wherein the length in an axial direction of at least one of the sliding block portions (20, 21) which protrudes from the braking band (3) is 6mm.

48. A braking system according to claim 42 or 43, wherein the length in an axial direction of at least one of the sliding block portions (20, 21) which protrudes from the braking band (3) is between 15mm and 30mm.

49. A braking system according to claim 42 or 43, wherein the length in an axial direction of at least one of the sliding block portions (20, 21) which protrudes from the braking band (3) is between 18mm and 22mm.

50. A braking system according to claim 42 or 43, wherein the length in an axial direction of at least one of the sliding block portions (20, 21) which protrudes from the braking band (3) is 20mm.

51. A braking system according to any one of claims 29 to 50, wherein each sliding block (13) has a length in a circumferential direction of between 8mm and 20mm.

52. A braking system according to any one of claims 29 to 50, wherein each sliding block (13) has a length in a circumferential direction of between 14mm and 18mm.

53. A braking system according to any one of claims 29 to 50, wherein each sliding block (13) has a length in a circumferential direction of 15mm.

54. A braking system according to any one of claims 29 to 53, wherein each sliding block (13) tapers in a direction away from the braking surface (7) of the band (3).

55. A braking system according to any one of claims 29 to 54, wherein the plurality of sliding blocks (13) is of pairs facing the projections (4) and the pairs of sliding blocks (13) are uniformly distributed circumferentially.

56. A braking system according to any one of claims 29 to 55, wherein said band (3) is made of cast iron.

57. A braking system according to any one of claims 29 to 56, wherein said band (3) is made of C.I. 180 HC Cu Cr cast iron.

## Patentansprüche

1. Glocke (2) für eine Gleitscheibenbremse, wobei die Glocke (2) ausgebildet ist, um an einer Radnabe eines Fahrzeuges befestigt zu werden, und ausgebildet ist, um mit einem Bremsband zusammenzuwirken, wobei die Glocke außen eine Mehrzahl von Vorsprüngen umfasst, welche sich parallel zu der Drehachse (X-X) erstrecken und Gleitoberflächen (12) für das Bremsband (3) definieren, **dadurch gekennzeichnet, dass** die Glocke (2) auf einer Oberfläche (22) davon, welche dem Bremsband (3) zugewandt ist, eine Mehrzahl von Ausnehmungen (23) umfasst, und dass die Ausnehmungen (23) teilweise und entfernbar Einsätze (4) aufnehmen, welche, wobei deren Abschnitt aus den Ausnehmungen (23) hervortritt, die Mehrzahl von Vorsprüngen bilden, welche die Gleitoberflächen (12) für das Bremsband (3) definieren, wobei jede Ausnehmung (23) einen Querschnitt aufweist, welcher zu der Basis der Ausnehmung (23) hin verjüngt ist, wobei die Ausnehmung ausgebildet ist, um einen Abschnitt des Einsatzes (4) von passender Gestalt aufzunehmen, wobei der Einsatz (4) mit der Ausnehmung (23) zwischen den Oberflächen des Einsatzes und der Ausnehmung durch Druckkontakt gekoppelt ist und die Ausnehmung (23) einen ausgesparten Basisabschnitt aufweist, um ein Glockenfenster (28) vorzusehen, wenn-sie mit dem Einsatz (4) gekoppelt ist, um ein korrektes Koppeln zwischen den Wänden des Einsatzes (4) und den Wänden der Ausnehmung (23) zu gewährleisten.

2. Glocke gemäß Anspruch 1, wobei die Einsätze (4) Stäbe sind.

3. Glocke gemäß Anspruch 1 oder 2, wobei die Einsätze (4) außen an der Glocke (2) gleichmäßig über den Umfang verteilt sind.

4. Glocke gemäß einem der vorangehenden Ansprüche, wobei jeder Einsatz (4) eine Längserstreckung aufweist, welche im Wesentlichen gleich jener der Glocke (2) ist.

5. Glocke gemäß einem der vorangehenden Ansprüche, wobei jeder der Einsätze (4) einen Querschnitt aufweist, welcher einen Abstand zwischen den gegenüberliegenden Gleitoberflächen (12) von zwischen 10mm und 20mm und vorzugsweise von 15mm aufweist.

6. Glocke gemäß einem der vorangehenden Ansprüche, wobei jeder Einsatz (4) gegenüberliegende und parallele Gleitoberflächen (12) für das Bremsband (3) aufweist.

7. Glocke gemäß Anspruch 6, wobei die gegenüberliegenden Gleitoberflächen (12) parallel zu einer radialen Medianebene (R-R) der Ausnehmung (23) sind.

8. Glocke gemäß einem der vorangehenden Ansprüche-, wobei jeder Einsatz (4) aus verschleißfestem und/oder tribologischem Material hergestellt ist.

9. Glocke gemäß einem der vorangehenden Ansprüche, wobei jeder Einsatz (4) aus reibungsminderndem Material hergestellt ist.

10. Glocke gemäß einem der Ansprüche 1 bis 7, wobei jeder Einsatz (4) aus korrosionsbeständigem Stahl, vorzugsweise aus austenitischem korrosionsbeständigem Stahl, hergestellt ist.

11. Glocke gemäß einem der Ansprüche 1 bis 7, wobei jeder Einsatz (4) aus korrosionsbeständigem X10CrNi 18 8-Stahl, der vorzugsweise aus gezogenen Barren gewonnen wurde, hergestellt ist.

12. Glocke gemäß einem der Ansprüche 1 bis 7, wobei jeder Einsatz (4) aus korrosionsbeständigem Stahl, vorzugsweise aus gehärtetem, vergütetem und geschliffenem martensitischem korrosionsbeständigem Stahl, hergestellt ist.

13. Glocke gemäß einem der vorangehenden Ansprüche, wobei jeder Einsatz (4) aus korrosionsbeständigem Stahl mit PVD-Beschichtung (Beschichtung durch physikalische Abscheidung aus der Dampfphase) aus Balinit™ hergestellt ist.

14. Glocke gemäß einem der vorangehenden Ansprüche, wobei der Körper der Glocke (2) aus modularem Gusseisen, vorzugsweise aus galvanisiertem C.I. 600-5, hergestellt ist.

15. Glocke gemäß einem der vorangehenden Ansprüche, wobei ein Geberrad (5) dem Körper der Glocke (2) zugeordnet ist.

16. Glocke gemäß Anspruch 15, wobei der Körper der Glocke (2) einen unterschnittenen Sitz (24) umfasst, der ausgebildet ist, um einen Ring aufzunehmen, welcher das Geberrad (5) bildet.

17. Glocke gemäß einem der Ansprüche 1 bis 14, wobei mindestens ein Einsatz (4) durch eines seiner Enden mit einem Ring verbunden ist, der ein Geberrad (5) bildet.

18. Glocke gemäß einem der vorangehenden Ansprüche, wobei der Körper der Glocke (2) zwischen zwei benachbarten Ausnehmungen (23) mindestens eine Rille (29) zur Lüftung und Entfernung von Schmutz aufweist.

19. Glocke gemäß Anspruch 18, wobei die Lüftungs- und Entfernungsrille (29) einem Lüftungskanal (15) zugewandt ist, der in dem Bremsband (3) vorgesehen ist.

20. Glocke gemäß einem der vorangehenden Ansprüche, wobei jede Ausnehmung (23) einen Querschnitt aufweist, der zu der Basis der Ausnehmung (23) hin verjüngt ist, wobei die Ausnehmung ausgebildet ist, um einen Abschnitt des Einsatzes (4) von passender Gestalt aufzunehmen.

21. Glocke gemäß Anspruch 20, wobei der Einsatz (4) mit der Ausnehmung (23) durch Druckkontakt zwischen den Oberflächen des Einsatzes und der Ausnehmung gekoppelt ist.

22. Glocke gemäß Anspruch 20 oder 21, wobei die seitlichen Wände (27) der Ausnehmung (23) in Bezug auf eine radiale Medianebene (R-R) in einem Winkel (A) von zwischen 3 Grad und 7 Grad, vorzugsweise von 5 Grad, geneigt sind.

23. Glocke gemäß einem der vorangehenden Ansprüche, wobei mindestens eines der Enden jedes Einsatzes (4) lösbar an dem Körper der Glocke (2) befestigt ist.

24. Glocke gemäß Anspruch 23, wobei ein erstes Ende jedes Einsatzes (4) lösbar mit dem Körper der Glocke (2) verbunden ist und ein zweites Ende lösbar mit einem Ring, der ein Geberrad (5) bildet, verbunden ist.

25. Scheibe für eine Gleitscheibenbremse, umfassend eine Glocke (2) gemäß einem der vorangehenden Ansprüche, und
ein Bremsband (3), welches mit der Glocke (2) zusammenwirkt.

26. Bremssystem (1), umfassend ein Bremsband (3), welches einen ringförmigen Körper mit einer Drehachse (X-X) aufweist, der mit gegenüberliegenden Bremsoberflächen (7) versehen ist, die ausgebildet sind, um mit einem Festsattel zusammenzuwirken, der mit Betätigungsmitteln versehen ist, welche gegenüber nur einer der Bremsoberflächen einer Scheibe angeordnet sind, zum Ausüben einer Bremswirkung auf die Scheibe und Drücken derselben gegen Bremsbeläge, wobei das Bremsband (3) Mittel für eine Gleitkopplung mit einer Glocke (2) umfasst, die gemäß einem beliebigen der Ansprüche 1 bis 24 definiert ist.

27. Bremssystem gemäß Anspruch 26, weiterhin umfassend zwei Bremsbänder (3) in einer spiegelbildlichen Anordnung und mit der Glocke (2) zusammenwirkend.

28. Bremssystem gemäß Anspruch 26, wobei die Mittel für eine Gleitkopplung des Bremsbandes (3) Gleitblöcke (13) umfassen, welche sich radial von dem Band zu der Drehachse (X-X) hin erstrecken und sich in Längsrichtung erstrecken, um von dem Bremsband in eine Richtung vorzuragen, die parallel zu der Drehachse (X-X) verläuft.

29. Bremssystem gemäß Anspruch 28, wobei jeder Gleitblock (13) nur eine Gleitoberfläche (14), die ausgebildet ist, um mit einer gegenüberliegenden Gleitoberfläche (18) eines Vorsprungs (4) zusammenzuwirken, und eine gegenüberliegende Oberfläche, welche einen Lüftungskanal (15) begrenzt, umfasst.

30. Bremssystem gemäß Anspruch 29, wobei für jeden Vorsprung (4) der Glocke (2) ein Paar von Gleitblöcken (13), die mit gegenüberliegenden Gleitoberflächen des Vorsprungs (4) zusammenwirken, vorgesehen ist.

31. Bremssystem gemäß Anspruch 30, wobei die gegenüberliegenden Gleitoberflächen (14) des Paars von Gleitblöcken (13) zueinander parallel sind.

32. Bremssystem gemäß Anspruch 31, wobei die gegenüberliegenden Gleitoberflächen (14) des Paares von Gleitblöcken (13) parallel zu einer radialen Ebene (R-R) sind, welche durch die Mittellinie des Querschnitts des Vorsprungs (4) verläuft.

33. Bremssystem gemäß einem der Ansprüche 28 bis 32, wobei gegenüberliegende Gleitblöcke (13) mit berandeten Sitzen (16) vorgesehen sind, welche jeweils ausgebildet sind einen Vorsprung (4) aufzunehmen.

34. Bremssystem gemäß Anspruch 33, wobei jeder Sitz (16) einen Abstand zwischen den gegenüberliegenden Gleitoberflächen (14) zwischen 7mm und 20mm aufweist.

35. Bremssystem gemäß Anspruch 33, wobei jeder Sitz (16) einen Abstand zwischen den gegenüberliegenden Gleitoberflächen (14) zwischen 12mm und 18mm aufweist.

36. Bremssystem gemäß Anspruch 33, wobei jeder Sitz (16) einen Abstand zwischen den gegenüberliegenden Gleitoberflächen (14) von 15mm aufweist.

37. Bremssystem gemäß einem der Ansprüche 30 bis 36, wobei jeder Gleitblock (13) eine Gleitoberfläche aufweist, die eine Höhe zwischen 5mm und 20mm aufweist.

38. Bremssystem gemäß einem der Ansprüche 29 bis 37, wobei jeder Gleitblock (13) eine Gleitoberfläche aufweist, die eine Höhe von 8,5mm aufweist.

39. Bremssystem gemäß einem der Ansprüche 33 bis 38, wobei jeder Sitz (16) radial in eine der Achse (X-X) entgegengesetzte Richtung ausgespart ist und, wenn er mit dem Vorsprung (4) gekoppelt ist, ein Lüftungsfenster (17) bildet.

40. Bremssystem gemäß Anspruch 39, wobei jedes Lüftungsfenster (17) seitlich durch in sich zurückkehrende unterschnittene (18) Wände begrenzt ist.

41. Bremssystem gemäß einem der Ansprüche 29 bis 40, wobei jeder Gleitblock (13) mit dem Körper des Bremsbandes (3) mittels eines Abschnitts mit einer vorgegebenen Nachgiebigkeit verbunden ist.

42. Bremssystem gemäß einem der Ansprüche 29 bis 41, wobei sich jeder Gleitblock (13) axial über das Bremsband (3) hinaus erstreckt, auf seinen beiden Seiten, und die Gleitoberflächen (14) für die Vorsprünge (4) der Glocke (2) bildet.

43. Bremssystem gemäß Anspruch 42, wobei die gegenüberliegenden Verlängerungen (20, 21) jedes Gleitblocks (13) Längen (1, L) aufweisen, die voneinander unterschiedlich sind.

44. Bremssystem gemäß Anspruch 42 oder 43, wobei die Länge in einer axialen Richtung von mindestens einem der Gleitblockabschnitte (20, 21), welcher von dem Bremsband (3) vorragt, zwischen 3mm und 30mm beträgt.

45. Bremssystem gemäß Anspruch 42 oder 43, wobei die Länge in einer axialen Richtung von mindestens einem der Gleitblockabschnitte (20, 21), welcher von dem Bremsband (3) vorragt, zwischen 3mm und 12mm beträgt.

46. Bremssystem gemäß Anspruch 42 oder 43, wobei die Länge in einer axialen Richtung von mindestens einem der Gleitblockabschnitte (20, 21), welcher von dem Bremsband (3) vorragt, zwischen 5mm und 7mm beträgt.

47. Bremssystem gemäß Anspruch 42 oder 43, wobei die Länge in einer axialen Richtung von mindestens einem der Gleitblockabschnitte (20, 21), welcher von dem Bremsband (3) vorragt, 6mm beträgt.

48. Bremssystem gemäß Anspruch 42 oder 43, wobei die Länge in einer axialen Richtung von mindestens einem der Gleitblockabschnitte (20, 21), welcher von dem Bremsband (3) vorragt, zwischen 15mm und- 30mm beträgt.

49. Bremssystem gemäß Anspruch 42 oder 43, wobei die Länge in einer axialen Richtung von mindestens einem der Gleitblockabschnitte (20, 21), welcher von dem Bremsband (3) vorragt, zwischen 18mm und 22mm beträgt.

50. Bremssystem gemäß Anspruch 42 oder 43, wobei die Länge in einer axialen Richtung von mindestens einem der Gleitblockabschnitte (20, 21), welcher von dem Bremsband (3) vorragt, 20mm beträgt.

51. Bremssystem gemäß einem der Ansprüche 29 bis 50, wobei jeder Gleitblock (13) eine Länge in einer Umfangsrichtung zwischen 8mm und 20mm aufweist.

52. Bremssystem gemäß einem der Ansprüche 29 bis 50, wobei jeder Gleitblock (13) eine Länge in einer Umfangsrichtung zwischen 14mm und 18mm aufweist.

53. Bremssystem gemäß einem der Ansprüche 29 bis 50, wobei jeder Gleitblock (13) eine Länge in einer Umfangsrichtung von 15mm aufweist.

54. Bremssystem gemäß einem der Ansprüche 29 bis 53, wobei jeder Gleitblock (13) in einer von der Bremsoberfläche (7) des Bandes (3) wegführenden Richtung verjüngt ist.

55. Bremssystem gemäß einem der Ansprüche 29 bis 54, wobei die Mehrzahl von Gleitblöcken (13) aus Paaren ist, welche den Vorsprüngen (4) zugewandt sind, und die Paare von Gleitblöcken (13) gleichmäßig über den Umfang verteilt sind.

56. Bremssystem gemäß einem der Ansprüche 29 bis 55, wobei das Band (3) aus Gusseisen hergestellt ist.

57. Bremssystem gemäß einem der Ansprüche 29 bis 56, wobei das Band (3) aus C.I. 180 HC Cu Cr-Gusseisen hergestellt ist.

## Revendications

1. Cloche (2) pour un frein à disque coulissant, laquelle cloche (2) est adaptée pour être fixée à un moyeu de roue d'un véhicule et adaptée pour co-opérer avec une bande de freinage, ladite cloche comprenant extérieurement une pluralité de saillies s'étendant parallèlement audit axe de rotation (X-X) définissant des surfaces de coulissement (12) pour la bande de freinage (3), **caractérisée en ce que** ladite cloche (2) comprend sur une surface (22) de celle-ci tournée vers la bande de freinage (3) une pluralité d'évidements (23) et **en ce que** lesdits évidements (23) reçoivent partiellement et de façon amovible des pièces d'insertion (4) constituant, avec leur partie sortant des évidements (23), ladite pluralité de saillies définissant les surfaces de coulissement (12) pour la bande de freinage (3), dans laquelle chaque évidement (23) a une section transversale s'effilant vers la base de l'évidement (23), ledit évidement étant adapté pour recevoir une partie de la pièce d'insertion (4) de forme correspondante, la pièce d'insertion (4) est couplée à l'évidement (23) par contact par pression entre les surfaces de la pièce d'insertion et de l'évidement, et ledit évidement (23) a une partie de base dégagée pour fournir une fenêtre de cloche (28) lorsqu'il est couplé à ladite pièce d'insertion (4), afin de garantir un couplage correct entre des parois de la pièce d'insertion (4) et des parois de l'évidement (23).

2. Cloche selon la revendication 1, dans laquelle lesdites pièces d'insertion (4) sont des barres.

3. Cloche selon la revendication 1 ou 2, dans laquelle lesdites pièces d'insertion (4) sont uniformément distribuées de façon circonférentielle extérieurement à la cloche (2).

4. Cloche selon l'une quelconque des revendications précédentes, dans laquelle chaque pièce d'insertion (4) a une étendue longitudinale sensiblement égale à celle de la cloche (2).

5. Cloche selon l'une quelconque des revendications précédentes, dans laquelle chacune desdites pièces d'insertion (4) a une section transversale ayant une distance entre les surfaces de coulissement opposées (12) comprise entre 10 mm et 20 mm et, de préférence, de 15 mm.

6. Cloche selon l'une quelconque des revendications précédentes, dans laquelle chaque pièce d'insertion (4) comprend des surfaces de coulissement opposées et parallèles (12) pour la bande de freinage (3).

7. Cloche selon la revendication 6, dans laquelle les surfaces de coulissement opposées (12) sont parallèles à un plan radial médian (R-R) de l'évidement (23).

8. Cloche selon l'une quelconque des revendications précédentes, dans laquelle chaque pièce d'insertion (4) est faite de matériau résistant à l'usure et/ou tribologique.

9. Cloche selon l'une quelconque des revendications précédentes, dans laquelle chaque pièce d'insertion (4) est faite de matériau anti-friction.

10. Cloche selon l'une quelconques des revendications 1 à 7, dans laquelle chaque pièce d'insertion (4) est faite d'acier résistant à la corrosion, de préférence d'acier austénitique résistant à la corrosion.

11. Cloche selon l'une quelconques des revendications 1 à 7, dans laquelle chaque pièce d'insertion (4) est faite d'acier résistant à la corrosion X10CrNi 18 8, de préférence obtenue à partir d'une barre étirée.

12. Cloche selon l'une quelconques des revendications 1 à 7, dans laquelle chaque pièce d'insertion (4) est faite d'acier résistant à la corrosion, de préférence d'acier martensitique durci, revenu et rectifié résistant à la corrosion.

13. Cloche selon l'une quelconque des revendications précédentes, dans laquelle chaque pièce d'insertion (4) est faite d'acier résistant à la corrosion avec un revêtement de Balinit™ PVD obtenu par dépôt physique en phase vapeur.

14. Cloche selon l'une quelconque des revendications précédentes, dans laquelle le corps de la cloche (2) est fait de fer de fonte modulaire, de préférence galvanisé C.I. 600-5.

15. Cloche selon l'une quelconque des revendications précédentes, dans laquelle une roue phonique (5) est associée au corps de la cloche (2).

16. Cloche selon la revendication 15, dans laquelle le corps de la cloche (2) comprend un siège découpé (24) adapté pour recevoir une bague formant la roue phonique (5).

17. Cloche selon l'une quelconques des revendications 1 à 14, dans laquelle au moins une pièce d'insertion (4) est reliée par une de ses extrémités à une bague formant une roue phonique (5).

18. Cloche selon l'une quelconque des revendications précédentes, dans laquelle le corps de la cloche (2) a entre deux évidements contigus (23) au moins une rainure (29) pour l'aération et l'élimination de poussière.

19. Cloche selon la revendication 18, dans laquelle la rainure d'aération et d'élimination (29) fait face à un canal d'aération (15) prévu dans la bande de freinage (3).

20. Cloche selon l'une quelconque des revendications précédentes, dans laquelle chaque évidement (23) a une section transversale s'effilant vers la base de l'évidement (23), ledit évidement étant adapté pour recevoir une partie de la pièce d'insertion (4) de forme correspondante.

21. Cloche selon la revendication 20, dans laquelle la pièce d'insertion (4) est couplée à l'évidement (23) par contact par pression entre les surfaces de la pièce d'insertion et de l'évidement.

22. Cloche selon la revendication 20 ou 21, dans laquelle les parois latérales (27) de l'évidement (23) sont inclinées par rapport à un plan radial médian (R-R) selon un angle (A) compris entre 3 degrés et 7 degrés, de préférence de 5 degrés.

23. Cloche selon l'une quelconque des revendications précédentes, dans laquelle au moins une des extrémités de chaque pièce d'insertion (4) est fixée de façon détachable au corps de la cloche (2).

24. Cloche selon la revendication 23, dans laquelle une première extrémité de chaque pièce d'insertion (4) est reliée de façon détachable au corps de la cloche (2) et une seconde extrémité est reliée de façon détachable à une bague formant une roue phonique (5).

25. Disque pour un frein à disque coulissant comprenant une cloche (2) selon l'une quelconque des revendications précédentes, et une bande de freinage (3) co-opérant avec ladite cloche (2).

26. Système de freinage (1), comprenant une bande de freinage (3) ayant un corps annulaire d'axe de rotation (X-X) pourvu de surfaces de freinage opposées (7) adaptées pour co-opérer avec un étrier fixe pourvu de moyens d'actionnement agencés devant seulement une des surfaces de freinage d'un disque pour appliquer une action de freinage sur le disque et l'abouter contre des plaquettes de freinage, ladite bande de freinage (3) comprenant des moyens pour se coupler de façon coulissante à une cloche (2) définie selon l'une quelconques des revendications 1 à 24.

27. Système de freinage selon la revendication 26, comprenant en outre deux bandes de freinage (3) dans un agencement symétrique et co-opérant avec une cloche (2).

28. Système de freinage selon la revendication 26, dans lequel lesdits moyens pour le couplage coulissant de la bande de freinage (3) comprennent des blocs coulissants (13) qui s'étendent de façon radiale à partir de la bande vers l'axe de rotation (X-X) et s'étendent longitudinalement pour faire saillie à partir de la bande de freinage dans une direction parallèles audit axe de rotation (X-X).

29. Système de freinage selon la revendication 28, dans lequel chaque bloc coulissant (13) comprend seulement une surface de coulissement (14), adaptée pour co-opérer avec une surface de coulissement opposée (12) d'une saillie (4), et une surface opposée bornant un canal d'aération (15).

30. Système de freinage selon la revendication 29, dans lequel pour chaque saillie (4) de la cloche (2) une paire de blocs coulissants (13) co-opérant avec des surfaces de coulissement opposées de la saillie (4) est fournie.

31. Système de freinage selon la revendication 30, dans lequel les surfaces de coulissement opposées (14) de la paire de blocs coulissants (13) sont parallèles l'une à l'autre.

32. Système de freinage selon la revendication 31, dans lequel les surfaces de coulissement opposées (14) de la paire de blocs coulissants (13) sont parallèles à un plan radial (R-R) passant à travers la ligne centrale de la section transversale de la saillie (4).

33. Système de freinage selon l'une quelconques des revendications 28 à 32, dans lequel des blocs coulissants opposés (13) sont fournis qui bornent des sièges (16), chacun adapté pour recevoir une saillie (4).

34. Système de freinage selon la revendication 33, dans lequel chaque siège (16) a une distance entre les surfaces de coulissement opposées (14) comprise entre 7 mm et 20 mm.

35. Système de freinage selon la revendication 33, dans lequel chaque siège (16) a une distance entre les surfaces de coulissement opposées (14) comprise entre 12 mm et 18 mm.

36. Système de freinage selon la revendication 33, dans lequel chaque siège (16) a une distance entre les surfaces de coulissement opposées (14) de 15 mm.

37. Système de freinage selon l'une quelconques des revendications 29 à 36, dans lequel chaque bloc coulissant (13) a une surface de coulissement ayant une hauteur comprise entre 5 mm et 20 mm.

38. Système de freinage selon l'une quelconques des revendications 29 à 37, dans lequel chaque bloc coulissant (13) a une surface de coulissement ayant une hauteur de 8,5 mm.

39. Système de freinage selon l'une quelconques des revendications 33 à 38, dans lequel chaque siège (16) est dégagé de façon radiale dans une direction opposée à l'axe (X-X), formant, lorsqu'il est couplé à la saillie (4), une fenêtre d'aération (17).

40. Système de freinage selon la revendication 39, dans lequel chaque fenêtre d'aération (17) est bornée latéralement par des parois découpées rentrantes (18).

41. Système de freinage selon l'une quelconques des revendications 29 à 40, dans lequel chaque bloc coulissant (13) est relié au corps de la bande de freinage (3) au moyen d'une partie avec une limite élastique prédéterminée.

42. Système de freinage selon l'une quelconques des revendications 29 à 41, dans lequel chaque bloc coulissant (13) s'étend de façon axiale au-delà de la bande de freinage (3), sur ses deux côtés, formant les surfaces de coulissement (14) pour les saillies (4) de la cloche (2).

43. Système de freinage selon la revendication 42, dans lequel les prolongements opposés (20, 21) de chaque bloc coulissant (13) ont des longueurs différentes (1, L) l'une de l'autre.

44. Système de freinage selon la revendication 42 ou 43, dans lequel la longueur dans une direction axiale d'au moins une des parties de bloc coulissant (20, 21) qui font saillie à partir de la bande de freinage (3) est comprise entre 3 mm et 30 mm.

45. Système de freinage selon la revendication 42 ou 43, dans lequel la longueur dans une direction axiale d'au moins une des parties de bloc coulissant (20, 21) qui font saillie à partir de la bande de freinage (3) est comprise entre 3 mm et 12 mm.

46. Système de freinage selon la revendication 42 ou 43, dans lequel la longueur dans une direction axiale d'au moins une des parties de bloc coulissant (20, 21) qui font saillie à partir de la bande de freinage (3) est comprise entre 5 mm et 7 mm.

47. Système de freinage selon la revendication 42 ou 43, dans lequel la longueur dans une direction axiale d'au moins une des parties de bloc coulissant (20, 21) qui font saillie à partir de la bande de freinage (3) est 6 mm.

48. Système de freinage selon la revendication 42 ou 43, dans lequel la longueur dans une direction axiale d'au moins une des parties de bloc coulissant (20, 21) qui font saillie à partir de la bande de freinage (3) est comprise entre 15 mm et 30 mm.

49. Système de freinage selon la revendication 42 ou 43, dans lequel la longueur dans une direction axiale d'au moins une des parties de bloc coulissant (20, 21) qui font saillie à partir de la bande de freinage (3) est comprise entre 18 mm et 22 mm.

50. Système de freinage selon la revendication 42 ou 43, dans lequel la longueur dans une direction axiale d'au moins une des parties de bloc coulissant (20, 21) qui font saillie à partir de la bande de freinage (3) est 20 mm.

51. Système de freinage selon l'une quelconques des revendications 29 à 50, dans lequel chaque bloc coulissant (13) a une longueur dans une direction circonférentielle comprise entre 8 mm et 20 mm.

52. Système de freinage selon l'une quelconques des revendications 29 à 50, dans lequel chaque bloc coulissant (13) a une longueur dans une direction circonférentielle comprise entre 14 mm et 18 mm.

53. Système de freinage selon l'une quelconques des revendications 29 à 50, dans lequel chaque bloc coulissant (13) a une longueur dans une direction circonférentielle de 15 mm.

54. Système de freinage selon l'une quelconques des revendications 29 à 53, dans lequel chaque bloc coulissant (13) s'effile dans une direction s'éloignant de la surface de freinage (7) de la bande (3).

55. Système de freinage selon l'une quelconques des revendications 29 à 54, dans lequel la pluralité de blocs coulissants (13) est formée de paires faisant face aux saillies (4) et les paires de blocs coulissants (13) sont uniformément distribuées de façon circonférentielle.

56. Système de freinage selon l'une quelconques des revendications 29 à 55, dans lequel ladite bande (3) est faite de fer de fonte.

57. Système de freinage selon l'une quelconques des revendications 29 à 56, dans lequel ladite bande (3) est faite de fer de fonte C.I. 180 HC Cu Cr.
